(19) Europäisches Patentamt / European Patent Office / Office européen des brevets

(11) **EP 3 354 626 A1**

(12) **EUROPEAN PATENT APPLICATION**

(43) Date of publication:
**01.08.2018 Bulletin 2018/31**

(51) Int Cl.:
*C03B 5/187* (2006.01)      *B01F 7/00* (2006.01)

(21) Application number: **17204637.7**

(22) Date of filing: **20.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **21.08.2009 US 235783 P**

(62) Document number(s) of the earlier application(s) in accordance with Art. 76 EPC:
**10747829.9 / 2 467 337**

(27) Previously filed application:
**20.08.2010 EP 10747829**

(71) Applicant: **UMICORE AG & CO. KG**
**63457 Hanau-Wolfgang (DE)**

(72) Inventor: **SINGER, Rudolf**
**63457 Hanau-Wolfgang (DE)**

(74) Representative: **Umicore RDI Patent Department**
**Watertorenstraat 33**
**2250 Olen (BE)**

Remarks:
This application was filed on 30-11-2017 as a divisional application to the application mentioned under INID code 62.

(54) **MIXING APPARATUS**

(57)    The present invention is related to a glass stirrer providing for improved stirring, reduced glass cord and easy adjustment of processing parameters during operation.

Fig. 1

**Description**

FIELD OF THE INVENTION

The present invention is directed to an apparatus for stirring glass, and in particular to an apparatus for stirring glass in transit from a main supply body to a working body or to a forming apparatus.

BACKGROUND OF THE INVENTION

Chemical and thermal homogeneity in glass is an essential part of forming high quality glass, in particular for display applications, such as flat-screen displays. The function of a glass melter is generally to produce glass with acceptable levels of gaseous or solid inclusions, but glass often shows cord (or schlieren) of chemically dissimilar phases. These non-homogeneous components of glass result from a variety of normal occurrences during melting, including refractory dissolution, melting stratification, glass surface volatilization, and temperature differences. The resulting cords are visible in the glass because of color and/or index differences.

One approach for improving the homogeneity of glass is to pass the molten glass through a vertically-oriented stir chamber arranged downstream of the melter. Such stir chambers are equipped with a stirrer having a central shaft which is rotated by a suitable motor. Blades extend from the shaft to mix the molten glass passing from the top to the bottom of the stir chamber. The present invention is concerned with a novel stir chamber and stirrer, in particular, for achieving high throughput and high mixing efficiency (mixing effectiveness) from such a chamber without introducing defects into the resulting glass.

To be effective in increasing homogeneity, a stirring system should perform the following three functions:

> (1) It should stretch the individual lumps of inhomogeneous glass into thin streaks. This function requires the application of shear stress to the glass.
> (2) It should cut the streaks into short segments. This function can be achieved through flow of the molten glass in a direction normal to the plane of the stirrer's blades.
> (3) It should disperse the short segments such that there is no recognizable pattern. This function can be achieved through the selection of blade shapes that push glass normal to the direction of bulk flow, i.e., blade shapes that produce at least some radial flow of the glass.

Reducing the thickness of the schlieren and cutting them makes them individually difficult to see on a microscopic scale. Dispersing them eliminates the possibility that a visible pattern will be left on a macroscopic scale.

In a continuous process all three functions must take place in a discrete time interval determined by the residence time of the glass in the stir chamber. If the flow rate of glass is increased, the glass has less time in the chamber for these three functions to take place.

For many glass products (e.g., architectural glass), only moderate homogeneity requirements apply. However, other glass products must meet stringent homogeneity and other quality standards. LCD glass is in this latter category. For this glass, both cord and inclusions need to be minimized and/or eliminated.

However, this object is supplemented by the objects of:

> (1) maintaining high glass throughput and (2) maintaining high stirring efficiency (e.g., low levels of schlieren). These objects pull in opposite directions, e.g., one can reduce stirrer speed to reduce sheer stress and thus erosion, but reduced stirrer speed means less efficient stirring and/or reduced throughput.

As discussed below, the present invention is able to simultaneously achieve these seemingly contradictory goals by providing a novel design for stirrers and stir chambers.

Usually, stir chambers have a cylindrical inner shape with a stirrer sweeping a volume of cylindrical shape. Such stirrers are widespread, known for a long time and described in US 7127919, US 2831664, US 3419373 and WO 2008/088432. These stirrer designs, however, have fixed sheer stresses and flow rates on all stirrers along the shaft, and the stirring parameters can only be modified during operation by changing the speed of the stirrer.

SHORT DESCRIPTION OF THE DRAWINGS:

> Figure 1 shows a stirring apparatus of the invention with an outlet on the lower side portion of the stirring chamber wall.
> Figure 2 shows a stirring apparatus of the invention with an outlet on the bottom of the stirring chamber.

Figure 3 shows a stirrer of the invention with three groups of impellers of increasing sizes.

Figure 4 shows the scheme of a stirring chamber with more than one opening angle.

Figure 5 is a partial top down view of a group of impeller blades disposed on the stirrer of FIG. 3.

Figure 6 is a partial perspective view of a group of impellers of FIG. 5.

Figure 7 shows an apparatus of the invention and stirrers with rod-shaped stirring elements with the stirring elements being connected by connecting elements.

Figure 8 shows different types of stirrers, wherein the stirring element is a thickened portion of the shaft.

Figure 9 shows an apparatus of the invention and stirrers with rod-shaped stirring elements.

Figure 10 shows an apparatus of the invention, wherein the stirring element is a thickened portion of the shaft and equipped with blade elements.

SHORT DESCRIPTION OF THE INVENTION

It was an object of the present invention to provide an apparatus for stirring molten glass which is both improving stirring effectiveness and further ways to modify the processing parameters during operation of the stirring apparatus. This is accomplished by providing a stirrer and a stirring apparatus in which vertical movement, in addition to the speed of the stirrer, will change the stirring parameters (like sheer stress) and in which the flow of molten glass being stirred is accelerated during its way from the inlet tube to the outlet tube through the stirring chamber so that the thickness of the schlieren is further reduced.

This object is accomplished by an apparatus for stirring molten glass as defined below:

1. An apparatus for stirring molten glass comprising:

- a substantially vertically-oriented stirring chamber having an inner shape of at least one cone or at least one section thereof;
- an inlet arranged at the upper end of the stirring chamber;
- an outlet arranged at the lower end of the stirring chamber, and
- a stirrer placed within the stirring chamber comprising:

    a. a substantially vertically oriented, rotatable and axially movable shaft,
    b. a plurality of stirring elements extending outward from said shaft, being adjacent to each other along the axis of the shaft, and
    c. said plurality of stirring elements being axially arranged along the shaft in such a way that each of the stirring elements sweeps over a circular area defining a swept radius $R_{blade}$, the stirring chamber at the position at each length of said shaft has an internal radius $R_{wall}$ being greater than $R_{blade}$, characterized in that said radius $R_{blade}$ of said circular area and correspondingly the size of the stirring elements increase along the length of the shaft from the lower portion of said shaft towards the upper portion of said shaft, the shaft being substantially coaxial with the cone of the stirring chamber and the stirring elements projecting radially from said shaft into close proximity of the wall of the stirring chamber.

2. An apparatus for stirring molten glass according to item 1, further comprising:

- a motor applying a torque T to the shaft of the stirrer to effect rotation of the stirrer within the stirring chamber, at a speed S as molten glass flows through the stirring chamber defining a swept volume V, said molten glass exhibiting a viscosity $\eta$;
wherein S, T, V, $R_{blade}$, $R_{wall}$ and $\eta$ are selected such that the following relationships are satisfied for each of said stirring elements at its respective position within the stirring chamber:

$$(STV/\eta)^{0.5} >= 5.0 \text{ kg/s;}$$

wherein S is the speed of the stirrer in radians per second, T is the torque applied to the shaft of the stirrer to rotate the stirrer in newton-meters, V is the swept volume defined by the stirrer in $m^3$, $\eta$ is the viscosity of the molten glass in kg/m * s; and

$$(2 \pi \eta N R_{blade}) / (R_{wall} - R_{blade}) <= 3.5*10^{-3} \text{ N/m}^2,$$

wherein $\eta$ and N are as defined above, $R_{wall}$ is the inner diameter of the stirring chamber at the position of a respective stirring element mounted on the shaft, and $R_{blade}$ is the maximum diameter of the stirring element mounted on the shaft and both $R_{wall}$ and $R_{blade}$ are in meters.

3. An apparatus according to item 1 or 2, wherein the inner surface of the stirring chamber comprises a plurality of grooves, said grooves being preferably substantially perpendicular with the axis of rotation of said shaft.

4. An apparatus according to item 1, 2 or 3, wherein said stirring elements of the stirrer are designed in such a way that the surface normal (the normal vector) of the surfaces of the stirring elements facing towards the inner surface of the stirring chamber are substantially perpendicular to the surface of the stirring chamber.

5. An apparatus according to one or more of items 1 to 5, wherein the plurality of stirring elements are a plurality of arcuately shaped impellers radially projecting from said shaft being adjacent to each other along the axis of the shaft, and a plurality of supporting elements for said impellers having portions laterally radiating from its center and having arcuate edges abutted against the impellers, wherein said supporting elements are axially arranged along the shaft, said arcuately shaped impellers being of the radius of the arcuate edges of said supporting elements abutted thereagainst, characterized in that the radius of both said impellers and the radius of said arcuate edges of said supporting elements increase along the length of the shaft.

6. An apparatus according to one or more of items 4 to 5, wherein the supporting elements are threaded over the shaft.

7. An apparatus according to one or more of items 1 to 6, wherein the impellers are arranged in groups of impellers of similar radius on a similar length of the shaft.

8. An apparatus according to item 7, wherein the groups of impellers consist of two, three or four impellers.

9. An apparatus according to any of items 5 to 8, wherein the proximate end of each impeller is anchored to the shaft.

10. An apparatus according to any of items 5 to 9, wherein two adjacent impeller blades are joined in such a way to form an arcuate shape being substantially circular in aspect.

11. An apparatus according to any of items 5 to 10, wherein adjacent impeller blades are curved in the opposite direction.

12. An apparatus according to any of items 5 to 12, wherein two adjacent impeller blades are joined in such a way to form an arcuate shape being substantially oval or elliptical in aspect.

13. An apparatus according to any of items 1 to 12, wherein the supporting members are arranged normal to the shaft.

14. An apparatus according to any of items 1 to 13, wherein the supporting members overlap one another when viewed in a vertical manner, thus obstructing direct downward flow of glass within the swept volume.

15. An apparatus according to any of items 1 to 14, wherein the swept volume is shaped like a section of a cone.

16. An apparatus according to any of items 1 to 15, wherein adjacent impeller blades are curved in the opposite direction.

17. An apparatus according to any of items 1 to 12, wherein the impeller blades define a plurality of holes extending through the thickness thereof, or wherein the impeller blades define a plurality of grooves in an outside surface thereof.

18. An apparatus according to any of items 1 to 4, wherein said stirring elements are rod-shaped stirring blades.

19. An apparatus according to any of items 1 to 4 or 18, wherein said stirring elements are rod-shaped stirring blades leading through corresponding orifices in said shaft arranged above each other along the length of the shaft.

20. An apparatus according to any of items 1 to 4 or 18 to 19, wherein said rod-shaped stirring blades are arranged above each other along the length of the shaft.

21. An apparatus according to item 20, wherein said rod-shaped stirring blades are arranged above each other along the length of the shaft and at an angle relative to each other in such a way that the surfaces of the stirring elements facing towards the inner surface of the stirring chamber are defining a helix.

22. An apparatus according to item 20, wherein said rod-shaped stirring blades are arranged above each other along the length of the shaft and connected to each other with at least one, substantially vertically-oriented, rod-shaped connecting element.

23. An apparatus according to any of items 1 to 4, wherein the stirring element comprises a thickened portion of the shaft.

24. An apparatus according to any of items 1 to 4 or 23, wherein the thickened portion has a shape that is selected from the group consisting of cylindrical, conical, spherical, hemispherical, frustoconical, bell-shaped and combinations thereof.

25. An apparatus according to any of items 1 to 4 or 23 to 24, wherein at least one blade element is fastened on the outside of said thickened portion.

26. An apparatus of item 23, wherein a plurality of blade elements are fastened to the outside of said thickened portion.

27. A method for homogenizing molten glass, comprising

- providing an apparatus according to at least one of items 1 to 26;
- flowing molten glass through the stirring chamber;

- applying a torque to the shaft of the stirrer to rotate the stirrer within the stir chamber as the molten glass flows through the chamber.

28. The method of item 27, said molten glass flowing through the stirring chamber at a rate of at least one ounce (28,34 g) per second.

29. A stirrer placed for molten glass comprising:

a. a substantially vertically oriented, rotatable and axially movable shaft,

b. a plurality of stirring elements extending outward from said shaft, being adjacent to each other along the axis of the shaft, and

c. said plurality of stirring elements being axially arranged along the shaft in such a way that each of the stirring elements sweeps over a circular area defining a swept radius $R_{blade}$, characterized in that said radius $R_{blade}$ of said circular area and correspondingly the size of the stirring elements increase along the length of the shaft from the lower portion of said shaft towards the upper portion of said shaft.

30. A stirrer for molten glass according to item 29, wherein the plurality of stirring elements are a plurality of arcuately shaped impellers radially projecting from said shaft being adjacent to each other along the axis of the shaft, and a plurality of supporting elements for said impellers having portions laterally radiating from its center and having arcuate edges abutted against the impellers, wherein said supporting elements are axially arranged along the shaft, said arcuately shaped impellers being of the radius of the arcuate edges of said supporting elements abutted thereagainst, characterized in that the radius of both said impellers and the radius of said arcuate edges of said supporting elements increase along the length of the shaft.

31. A stirrer for molten glass according to item 29 or 30, wherein the supporting elements are threaded over the shaft.

32. A stirrer for molten glass according to one or more of items 29 to 31, wherein the impellers are arranged in groups of impellers of similar radius on a similar length of the shaft.

33. A stirrer for molten glass according to item 32, wherein the groups of impellers consist of two, three or four impellers.

34. A stirrer for molten glass according to one or more of items 29 to 33, wherein the proximate end of each impeller is anchored to the shaft.

35. A stirrer for molten glass according to one or more of items 29 to 34, wherein two adjacent impeller blades are joined in such a way to form an arcuate shape being substantially circular in aspect.

36. A stirrer for molten glass according to one or more of items 29 to 35, wherein adjacent impeller blades are curved in the opposite direction.

37. A stirrer for molten glass according to one or more of items 29 to 36, wherein two adjacent impeller blades are joined in such a way to form an arcuate shape being substantially oval or elliptical in aspect.

38. A stirrer for molten glass according to one or more of items 29 to 37, wherein the supporting members are arranged normal to the shaft.

39. A stirrer for molten glass according to one or more of items 29 to 38, wherein the supporting members overlap one another when viewed in a vertical manner, thus obstructing direct downward flow of glass within the swept volume.

40. A stirrer for molten glass according to one or more of items 29 to 39, wherein the swept volume is shaped like a section of a cone.

41. A stirrer for molten glass according to one or more of items 29 to 40, wherein the impeller blades define a plurality of holes extending through the thickness thereof or wherein the impeller blades define a plurality of grooves in an outside surface thereof.

42. A stirrer for molten glass according item 29, wherein said stirring elements are rod-shaped stirring blades.

43. A stirrer for molten glass according to one or more of items 29 or 42, wherein said stirring elements are rod-shaped stirring blades leading through corresponding orifices in said shaft arranged above each other along the length of the shaft.

44. A stirrer for molten glass according to one or more of items 29 or 42 to 43, wherein said rod-shaped stirring blades are arranged above each other along the length of the shaft.

45. A stirrer for molten glass according to item 44, wherein said rod-shaped stirring blades are arranged above each other along the length of the shaft and at an angle relative to each other in such a way that the surfaces of the stirring elements facing outward from said shaft are defining a helix.

46. A stirrer for molten glass according to item 44, wherein said rod-shaped stirring blades are arranged above each other along the length of the shaft and connected to each other with at least one, substantially vertically-oriented, rod-shaped connecting element.

47. A stirrer for molten glass according to item 29, wherein the stirring element comprises a thickened portion of the shaft.

48. A stirrer for molten glass according to item 29 or 47, wherein the thickened portion has a shape that is selected from the group consisting of cylindrical, conical, spherical, hemispherical, frustoconical, bell-shaped and combinations thereof.

49. A stirrer for molten glass according to item 29 or 47 to 48, wherein at least one blade element is fastened on the outside of said thickened portion.

50. A stirrer for molten glass according to item 29 or 47 to 49, An apparatus of item 23, wherein a plurality of blade elements are fastened to the outside of said thickened portion.

The invention thus also relates to a stirrer for molten glass as defined hereinabove under any one of items 1 to 26 describing the apparatus as a whole and a method of homogeneizing glass employing the apparatus of any of items 1 to 26.

DETAILED DESCRIPTION OF THE INVENTION

In the apparatus of the invention comprises a substantially vertically-oriented stirring chamber having an inner shape of at least one cone or at least one section thereof. The diameter increases from the lower portion of the stirring chamber towards the upper portion of the stirring chamber, so that the diameter at the bottom of the stirring chamber is lower than at the top. The stirring chamber has an inlet arranged at the upper end of the stirring chamber, where liquid glass is introduced into the stirring chamber after it has been molten in a suitable device and usually passes through a refining chamber before entering the apparatus of the invention.
Such refining chambers are, in general, known and for example disclosed in US 2010/0126225 and US-B2-7490487, which are incorporated by reference for all useful purposes. The stirring chamber also has an outlet arranged at the lower end of the stirring chamber for removal of the molten glass after stirring and homogenization thereof. According to the invention, the stirring chamber has an internal radius $R_{wall}$ that is increasing from the lower portion of the stirring chamber to the upper portion of the stirring chamber, that is, the radius increases from the outlet towards the inlet of the stirring chamber. The stirring chamber is shaped conically with at least one opening angle, defining the angle in which in a cross section of the stirring chamber according to the invention the side wall of said stirring chamber deviates outward from a cylindrical shape. This angle usually is 1 degree or greater, but 45 degrees or less.
In particular, the angle is from 4.5 degrees to 35 degrees, or from 5 degrees to 25 degrees, or from 7 to 17.3 degrees and should be individually adapted for the desired shear stresses, rotation speed, glass viscosity and the like.
The statement that the stirring chamber has at least one opening angle, and is shaped according to at least one cone means that the opening angle of the stirring chamber does not need to be identical throughout the entire height of the stirring chamber, but may change and consequently require a stirrer having appropriate diameters of the stirring elements, e.g. which stirring elements being impellers and the supporting elements.

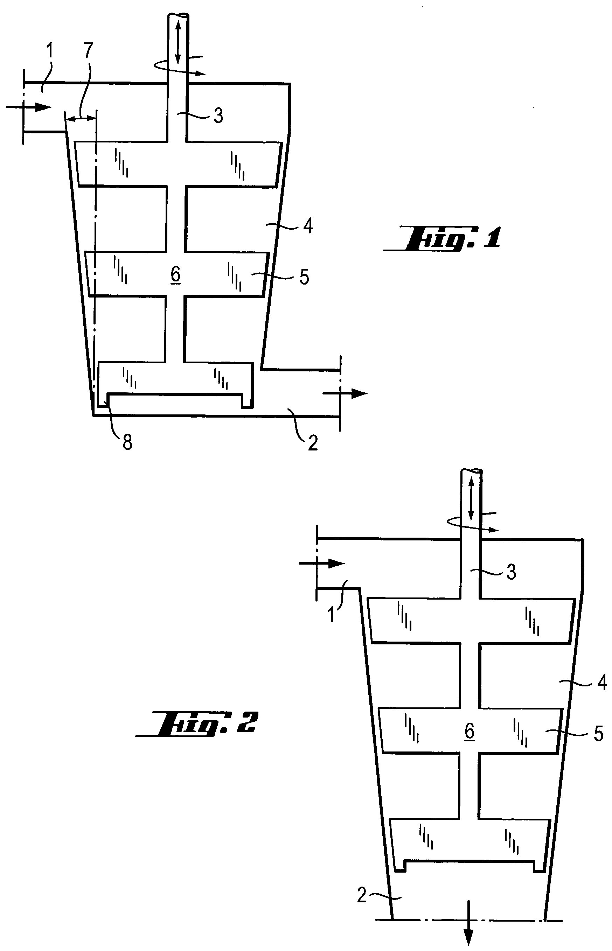

The outlet can be designed in different way, in one way the radius $R_{wall}$ of the stirring chamber reduces and at some point merges into the outlet, like a tube (Fig. 2), in a further, preferred embodiment the outlet is designed in such a way that the flow direction of the molten glass is changed, such as the outlet tube being connected to the side of the stirring g chamber and thus forcing the flow of glass into a different direction when passing through the outlet (Fig. 1).
Within the stirring chamber, a stirrer is placed that will rotate during operation. During operation the molten glass preferably passes through the stirring chamber by means of gravity and is preferably not conveyed through it by the rotating stirrer, so the role of the stirrer primarily is the stirring and homogenization of the molten glass and not its propulsion.
The stirrer placed within the stirring chamber comprises a substantially vertically oriented, rotatable and axially movable shaft.
According to the invention, the shaft is rotatable and axially movable. The cross-section of the shaft may be round, oval, triangular, square hexagonal or polygonal and may be tubular, i.e. hollow, or a massive part. It may also be made of two different materials, like a material in the center covered by a different material, such as a material that is cheap in the center and covered by a more expensive material exhibiting e.g. a higher corrosion resistance.
During operation in the apparatus of the invention, the shaft is rotated by suitable means, e.g. a motor, and the molten glass in the stirring chamber is mixed and may optionally moved towards the outlet.
For the stirrer to be efficient, it has to be equipped with a plurality of stirring elements extending outward from said shaft, being adjacent to each other along the axis of the shaft, and said plurality of stirring elements being axially arranged along the shaft in such a way that each of the stirring elements sweeps over a circular area defining a swept radius $R_{blade}$. The stirring chamber, at the position of each length of said shaft has an internal radius $R_{wall}$ being greater than $R_{blade}$, characterized in that said radius $R_{blade}$ of said circular area and correspondingly the size of the stirring elements increase along the length of the shaft from the lower portion of said shaft towards the upper portion of said shaft, the shaft being substantially coaxial with the cone of the stirring chamber and the stirring elements projecting radially from said shaft into close proximity of the wall of the stirring chamber.
In order to adapt the stirring parameters during operation, the speed of the stirrer can be changed. It is an advantage of the present invention that the processing parameters can be changed during operation in addition by axial movement of the shaft. Since the shape of the stirring chamber is conical, axial movement will increase (or decrease, respectively) the distance between the stirring chamber and the stirrer. If the stirrer is moved upward and the distance between the stirrer and the stirring chamber is increased, the shear applied to the molten glass is decreased, if the stirrer is moved downward and the distance between the stirrer and the stirring chamber is decreased, the shear applied to the molten glass is increased. If desired, the speed of the stirrer can be increased or decreased at the same time.

This change of the processing parameters can be used to adapt the apparatus to different products or to varying viscosity of the molten glass and in this case the processing parameters are adapted when the product is changed, or a better adjustment of different processing parameters to the optimum result can be achieved.

However, axial movement of the stirrer can also be used to improve the mixing during normal operation, for example by effecting the axial movement periodically or aperiodically during operation.

Since molten glass to which both the stirrer and the apparatus of the invention are exposed partially or entirely may well exceed 1000°C, it is evident that the materials of the stirrer and the apparatus of the invention are made of must be capable of withstanding such high temperatures. Such materials are refractory metals, in particular tantalum, niobium, tungsten, molybdenum, iridium, rhodium, palladium and platinum. As mentioned above, the stirring chamber, the stirrer or parts thereof may also be made of two different materials, like a material in the center covered by a different material, such as a material that is cheap in the center and covered by a more expensive material exhibiting e.g. a higher corrosion resistance. For example, parts of the stirrer and/or the apparatus can be made of molybdenum, and thereafter coated with another refractory metal comprising platinum. The molybdenum core provides shape and mechanical strength to the stirrer, whereas the platinum outer layer provides wear and corrosion resistance. In other embodiments, the core of the stirrer may be formed entirely of platinum, or a platinum alloy, such as a platinum-rhodium alloy. Platinum in particular is a desirable refractory metal for glass stirring applications because of its high melting point, corrosion resistance and workability. Most preferred are ODS (Oxide Dispersion Strengthened) platinum, platinum-rhodium alloys or combinations thereof. Oxide dispersion strengthened platinum is a preferred material, in particular zirconia dispersion strengthened platinum is preferred, but e.g. yttria dispersion strengthened platinum is also suitable. Preparation of these materials is known and described, for example, in EP 1781830 and EP 1295954, which are incorporated by reference for all useful purposes. Parts of the apparatus may also be made of a ceramic and covered by platinum. For example, the stirring chamber can be made of platinum and embedded into a ceramic material as support.

Nonetheless, platinum, or even platinum rhodium alloys, are not immune to erosion during high temperature stirring processes.

In order to reduce wear of the stirrer, it is advantageous if the stirring elements define a plurality of grooves in an outside surface thereof. These modifications will produce a static or quasi-static layer of molten glass on surfaces of the stirrer. In particular, the distal end portions of the stirring elements may comprise grooves or holes in the outside surface thereof. Preferably, grooves are perpendicular to the flow of glass over the surface comprising the grooves, but may vary depending upon the design of the stirring elements. Grooves trap the viscous molten glass, creating a layer of static or quasi static glass over the end portions of the stirring elements. Whereas a smooth surface as used in conventional stirrers leads to flow related erosion of the surface, a static layer of molten glass according to the present embodiment has the effect of forming a protective layer of glass over the surface of the stirring element(s), thereby reducing stirring element erosion by reducing the flow of glass over the surface of the impeller. Grooves may be periodic or non-periodic in their arrangement. They may be rectangular in shape, with sharp corners defining the groove, or exhibit rounded corners and/or arcuate or angled walls. The grooves may also vary in size, i.e. the width of the grooves varies. A stirring element may comprise all or some of the modifications to reduce wear, e.g. a portion of the grooves being non-periodic or periodic, varying width and varying groove wall shapes.

In combination therewith or in substitution thereof, an iridium layer can be applied on portions of the stirrer to reduce wear as described in WO 2008/088432. In combination or substitution therewith, said grooves or said iridium layer may as well be applied. In the apparatus according to the invention the inner surface of the stirring chamber preferably comprises a plurality of grooves, said grooves being preferably roughly perpendicular with the axis of rotation of said shaft. This also reduces the wear of the stirrer.

These measures can also be applied in the embodiments of the invention described below.

In a further embodiment of the invention, said stirring elements of the stirrer are designed in such a way that the surface normal (the normal vector) of the surfaces of the stirring elements facing towards the inner surface of the stirring chamber are substantially perpendicular to the surface of the stirring chamber. In other words, the stirring elements do not necessarily be adapted to the shape of the chamber, it is sufficient that merely the length is adjusted such that there is no direct contact between the stirring chamber wall and the outer edge of the stirring element. In order to take full benefit of the invention, however it is preferred that the outer edges of the stirring elements are sloped in such a way that they are parallel to the inner surface of the walls of the stirring chamber, which requires them to be sloped with the same opening angle as the corresponding section of the stirring chamber.

In summary, one of the stirrers of the invention as described above is placed in a conical stirring chamber having slightly bigger dimensions than the portions of the stirrer most remote from the centre of the shaft.

Due to the conical shape of the stirring chamber, axial movement of the stirrer (i.e. lifting or lowering) can be used to modify the stirring parameters of the stirring apparatus during operation. Moreover, the conical shape of the stirring chamber, due to its shape similar to a funnel, also accelerates the molten glass and in this way reduces the thickness of cord or schlieren.

Preferably, the apparatus for stirring molten glass according as described above further comprises a motor applying a torque T to the shaft of the stirrer to effect rotation of the stirrer within the stirring chamber. The stirrer will rotate at a speed S as molten glass flows through the stirring chamber defining a swept volume V, the molten glass exhibiting a viscosity $\eta$, and wherein S, T, V, $R_{blade}$, $R_{wall}$ and $\eta$ are selected such that the following relationships are satisfied for each of said stirring elements at its respective position within the stirring chamber:

$$(STV/\eta)^{0.5} >= 5.0 \text{ kg/s} \qquad\qquad (\text{Relation 1})$$

wherein S is the speed of the stirrer in radians per second, T is the torque applied to the shaft of the stirrer to rotate the stirrer in newton-meters, V is the swept volume defined by the stirrer in $m^3$, $\eta$ is the viscosity of the molten glass in kg/m * s; and

$$(2\,\pi\,\eta\,N\,R_{blade}) / (R_{wall} - R_{blade}) <= 3.5*10^{-3} \text{ N/m}^2, \qquad (\text{Relation 2})$$

wherein $\eta$ and N are as defined above, $R_{wall}$ is the inner diameter of the stirring chamber at the position of a respective stirring element mounted on the shaft, and $R_{blade}$ is the maximum diameter of the stirring element mounted on the shaft and both $R_{wall}$ and $R_{blade}$ are in meters.

Both relationships are preferably satisfied on each portion of the stirrer or each stirring element mounted on the shaft. Relation 1 is a measure of the throughput of the stirrer, which is to be maximized. Relation 2 is a measure of the shear forces applied to the stirrer and are to be minimized in order to avoid excessive wear of the stirrer resulting in shortened lifetimes and increased contamination of glass.

Typically, the rotation speed S is of from about 6 to 60 rotations per minute, in particular about 6 to 30 rotations per minute, more specifically about 12 to 16 rotations per minute.

The viscosity $\eta$ of the glass usually is from about 100 to 6000 poise, particularly from about 1000 to 3000 poise.

In one specific embodiment of the invention, the plurality of stirring elements are a plurality of arcuately shaped impellers radially projecting from said shaft being adjacent to each other along the axis of the shaft, and a plurality of supporting elements for said impellers having portions laterally radiating from its center and having arcuate edges abutted against the impellers, wherein said supporting elements are axially arranged along the shaft, said arcuately shaped impellers being of the radius of the arcuate edges of said supporting elements abutted thereagainst, characterized in that the radius of both said impellers and the radius of said arcuate edges of said supporting elements increase along the length of the shaft from the lower portion of the shaft towards the upper portion of the shaft.

In this embodiment, the supporting elements are fixed to the shaft by a suitable means providing sufficient stabilization and sufficient resistance to the forces applied to the supporting elements during operation of the stirrer. For example, the supporting elements can be threaded over the shaft and fixed thereto; they may also be casted together with the shaft, welded to the shaft or cut out of a single piece together with the shaft.

The impellers are preferably arranged in groups of impellers of similar radius on a similar length of the shaft. It is also possible that the impellers are arranged singly, e.g. in a pattern similar to the stairs on a helical stair or corkscrew staircase, but it is preferred that a number of impellers are placed on a similar or the same level. Such a group of impellers consists preferably of two, three or four impellers. Usually, the proximate end of each impeller is anchored to the shaft. Although good mixing is already provided with adjacent impeller blades being curved in the same direction, it is preferred if the impeller blades are curved in the opposite direction.

In this variant of the embodiment (impeller blades curved in the opposite direction), it is beneficial to improve the stability of the stirrer when two adjacent impeller blades that are curved in the opposite direction are joined in such a way to form an arcuate shape being substantially circular in aspect. Since the size of even adjacent impellers may vary, it is also possible that the radii of two joined impeller blades vary, thus resulting in a stirrer, wherein two adjacent impeller blades are joined in such a way to form an arcuate shape being substantially oval or elliptical in aspect.

According to the invention it is preferred when the supporting members are arranged normal to the shaft, i.e. the surface normal of the supporting elements is parallel to the length of the shaft. It is, however, also possible that the supporting members are tilted to yield a propeller-like geometry, wherein the surface normal of the supporting elements is not parallel to the length of the shaft and thus resulting in the supporting members either pushing the stirred glass into the direction of the bottom of the stirrer or pulling it into the direction of the top of the stirrer. In such a case it is preferred that supporting members on adjacent levels along the length of the shaft are tilted in such a way that they are moving the glass in opposite direction, i.e. the upper level supporting members push the molten glass downward while the lower level supporting members pull the molten glass upward. This will prevent the stirrer from propelling the molten glass into a direction and at the same time increase turbulences in the molten glass to improve homogenization.

In the stirrer according to the invention, the supporting members preferably overlap one another when viewed in a vertical manner, thus obstructing direct downward flow of glass within the swept volume. In a less preferred alternative, the supporting members may also not overlap and thus allowing the downward flow of glass, or may specifically have holes or cutouts to allow the downward flow off glass.

As a result of the radius of both said impellers and the radius of said arcuate edges of said supporting elements increasing along the length of the shaft, the swept volume of the stirrer is shaped like a section of a cone. Not only the supporting members, but also the impeller blades of the stirrer can be tilted. According to the invention, the impeller blades are preferably tilted in such a way that the surface normal (the normal vector) of the impeller blades is substantially perpendicular to the surface of the stirring chamber, that is, the surfaces of the impeller blades are parallel to the inner surface of the stirring chamber.

In yet another embodiment of the Invention, said stirring elements are rod-shaped stirring blades. The rods need to have a sufficient stiffness so they do not bend when forced through the molten glass during operation. Usually, the thickness of such stirring elements does not exceed the thickness of the shaft and in particular, the thickness of the rod-shaped stirring elements is lower than the shaft. Alternatively, it is of course possible that the rod-shaped stirring elements are thicker than the shaft and threaded onto the shaft or mounted in such a way as if being threaded onto the shaft.

The cross section of the rod-shaped stirring elements can be the same or different than the shaft. The cross section is usually round, oval, triangular, or polygonal, like e.g. quadratic, pentagonal or hexagonal. Preferably the cross section is the same as that of the shaft and round. The stirring elements are fixed to the shaft by a suitable means providing sufficient stabilization and sufficient resistance to the forces applied to the supporting elements during operation of the stirrer. For example, the stirring elements can be casted together with the shaft, welded to the shaft or cut out of a single piece together with the shaft. The stirring elements may also be rod-shaped stirring elements leading through corresponding orifices in said shaft arranged above each other along the length of the shaft.

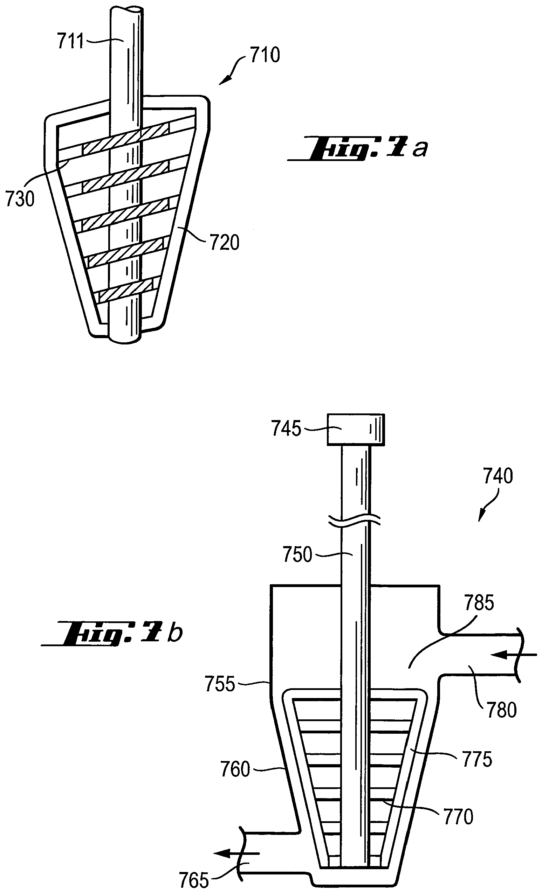

In one variant of this embodiment, said rod-shaped stirring blades are arranged above each other along the length of the shaft. If this embodiment is chosen, the stirring members do not overlap one another when viewed in a vertical manner and thus are less suitable for obstructing direct downward flow of glass within the swept volume, but nonetheless due to the large number of stirring elements that can be employed still provide good homogenization of the molten glass. Usually a number of about 2 to 10, in particular 3 to 8 or 4 to 7 rod-shaped stirring elements are mounted to the shaft. Optionally, the said rod-shaped stirring elements are arranged above each other along the length of the shaft and connected to each other with at least one, substantially vertically-oriented, rod-shaped connecting element, usually with two such connecting element. The rod-shaped stirring elements may be mounted orthogonal to the shaft, but may as well be mounted sloped relative to the shaft. Particularly, about 3 to 7 rod-shaped stirring blades are arranged above each other along the length of the shaft and connected to each other with two connecting elements, one on each side, with the stirring elements mounted sloped to the shaft. (Fig. 7a, 7b)

The effect that the stirring members do not overlap one another when viewed in a vertical manner and thus are less suitable for obstructing direct downward flow of glass within the swept volume can be addressed by another variant of this embodiment, said rod-shaped stirring blades are arranged above each other along the length of the shaft and at an angle relative to each other in such a way that the surfaces of the stirring elements facing towards the inner surface of the stirring chamber are defining a helix, so that the stirrer reminds to the pattern similar to the stairs on a helical stair or corkscrew staircase. In this way, a larger area of the swept volume is covered by stirring elements thus the direct downward flow is impaired more significantly. The angle at which the stirring elements are twisted along each other depends on the number of elements and the volume to be swept and is in general between 10 degrees to 45 degrees, in particular 20 to 40 degrees or 25 to 35 degrees. Exemplary, 30 degrees can be well employed with six stirring elements.

To effectively obstructing direct downward flow of glass within the swept volume yet another embodiment of the invention can be employed. In this further embodiment, the stirring element comprises a thickened portion of the shaft. The cross section of the rod-shaped stirring elements can be the same or different than the shaft, but preferably is the same, but with the thickness of the shaft varying. The cross section is usually round, oval, triangular, or polygonal, like e.g. quadratic, pentagonal or hexagonal. Preferably the cross section is the same as the same as the shaft and round. The thickened portion can be fixed to the shaft in different ways, it may be casted together with the shaft, welded to the shaft or cut out of a single piece together with the shaft. The thickened portion may also be a hollow part. The thickened portion may have a shape that is selected from the group consisting of cylindrical, conical, spherical, hemispherical, frustoconical, bell-shaped and combinations thereof.

In this embodiment, the glass flow is forced to flow around the thickened portion. Preferably, at least one blade element is fastened on the outside of said thickened portion, in particular a plurality of blade elements are fastened to the outside of said thickened portion. These elements are fixed to the thickened portion by a suitable means providing sufficient stabilization and sufficient resistance to the forces applied to the supporting elements during operation of the stirrer; they may also be casted together with the shaft, welded to the shaft or cut out of a single piece together with the shaft. In particular, these blade elements are pieces of sheet metal that are e.g. rectangular or quadratic in shape and may be arranged in a regular pattern over the surface, e.g. rows of blade elements placed with a void between each other. Preferably, neighboring rows are placed in such a way that the blade elements are placed opposite to the voids between the blade elements of the neighboring rows. The cross section of said blade elements is usually rectangular, but can also be round, oval, triangular, or polygonal, like e.g. quadratic, pentagonal or hexagonal. As can be seen above, the present invention relates to an apparatus for homogenizing molten glass that on one hand is characterized by a conical stirring chamber and on the other hand by a stirrer placed inside said stirring chamber and shaped in such a way that it is adapted to the conical shape of the stirring chamber.

Consequently, this invention also relates to the stirrers for molten glass as defined hereinabove.

The present invention also relates to a method for homogenizing molten glass, comprising

- providing an apparatus for stirring molten glass as described hereinabove;
- flowing molten glass through the stirring chamber;

applying a torque to the shaft of the stirrer to rotate the stirrer within the stir chamber as the molten glass flows through the chamber. In this method according to the invention, said molten glass is flowing through the stirring chamber at a rate of at least one ounce (28,34 g) per second, preferably at least about two ounces (54,34 g) per second, or about at least 50 g per second.

DETAILED DESCRIPTION OF THE DRAWINGS

Figure 1 shows an apparatus for mixing molten glass according to the invention with an inlet 1, an outlet 2, a shaft 3, the stirring chamber 4, stirring elements (here drawn as impellers) 5, an opening angle 7, and blades 8, wherein with the impellers 5 being mounted to the shaft 3 and the blades 8 are connected with the impellers 5 to form the stirrer 6. Note that the shaft 3 is rotatable and axially movable and the stirring chamber exhibits an outlet 2 on the side of the stirring chamber and that the diameter is reduced at the lower portion of the stirring chamber.

Figure 2 shows an apparatus for mixing molten glass according to the invention with an inlet 1, an outlet 2, a shaft 3, the stirring chamber 4, stirring elements (here drawn as impellers) 5, an opening angle 7, and blades 8, wherein with the impellers 5 being mounted to the shaft 3 and the blades 8 are connected with the impellers 5 to form the stirrer 6. Note that the shaft 3 is rotatable and axially movable and the stirring chamber exhibits an outlet 2 on the bottom of the stirring chamber and that the diameter is reduced at the lower portion of the stirring chamber.

Illustrated in figures 1 and 2, is a stirring apparatus of the invention, with different embodiments of the stirring chamber.
The stirring apparatus comprises an inlet tube 1 extending between a supply of molten glass that is not shown and the stirring chamber 4 having a conical shape. Inlet 1 and stirring chamber 4 may be surrounded by electrical heating windings and insulated to prevent excessive heat loss. The stirred and homogenized molten glass issues from stirring chamber 4 through outlet 2, which, although not shown, may also be surrounded by heating means, preferably electrical heating elements. The diameter of outlet 2 may be that size deemed most suitable for flowing the molten glass, depending upon the viscosity of the glass, the particular style of stirrer 6 arranged within stirring chamber 4, the rotational speed of the stirrer, and the diameter of the stirrer relative to the inside wall dimensions of the stirring chamber.

Stirrer 6, rotatable disposed within the stirring chamber 4, may take any number of forms. It has been found that the most efficient stirrer may not be the best stirrer for all operating conditions. Complete homogenization of the molten glass can be obtained only if the entire body of glass is forced to pass through a zone of turbulence where the different portions of the glass are progressively sheared with respect to one another, and cords and inhomogeneities are attenuated and dispersed through the glass. Desired results can best be obtained by passing the glass through the stirring chamber of conical shape, having a longitudinally extending stirrer disposed therein whose maximum diameters are only slightly less than that of the stirring chamber. Preferably, stirrer 6 is disposed concentrically within stirring chamber 4. That is, the axis of rotation of stirrer 6 is coincident with the central longitudinal axis of the stirring chamber 4. Note that the impellers 5 are tilted so their surfaces are essentially parallel to the inside walls, as can be recognized by the terminal edges of the impellers 5 of the stirrer 6 in this scheme being parallel to the inclined lines depicting the walls of the stirring chamber 4. The effectiveness of the mixing apparatus is also influenced by the speed of rotation of stirrer 6. Thus, the glass capacity of the equipment (as measured by the rate of through flow of the molten glass) is determined not only by its dimensions, but also by the speed of rotation of the stirrer deposited therein. If the rate of flow of the molten glass through the apparatus is kept low, such as when the apparatus outlet is constricted, or the glass viscosity is high, a speed of rotation of a relatively few revolutions per minute will suffice to appropriately mix the glass and dynamically disrupt the continuity of a downward flow of glass along the cylinder wall. On the other hand, as the outlet is enlarged and the flow rate increased, the speed of the stirring action must also be increased to maintain the dynamic condition for production of the desired glass quality.

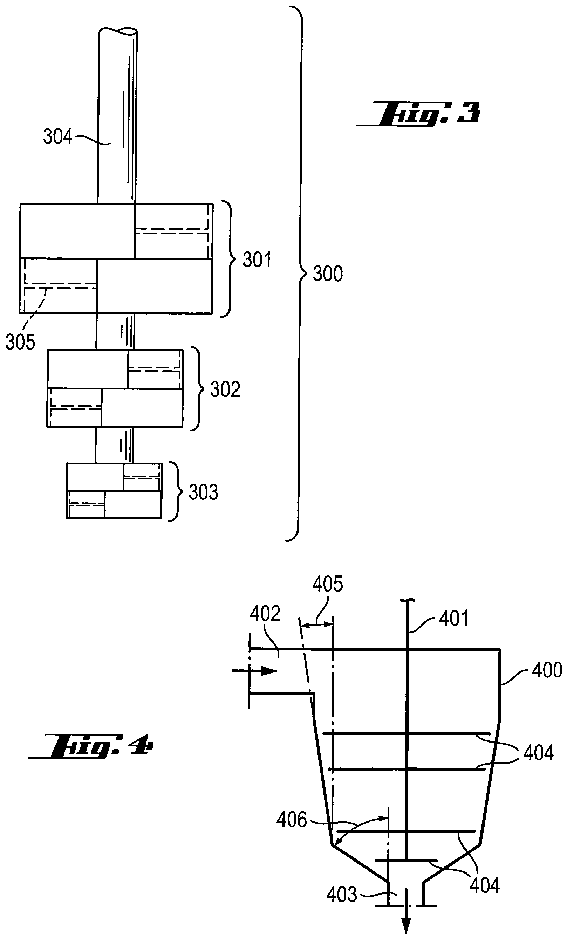

Figure 3 shows a stirrer 300 according to the invention, exhibiting a shaft 304 and comprising groups 301, 302 and 303, respectively, of arcuate shaped impellers arranged along the length of the shaft and wherein the diameter of the impellers increases along the length of the shaft. Note the impellers are not tilted in stirrer 300. Please also note the supporting elements 305 that are covered by the impellers in the view of Fig. 3 are depicted with dashed lines, and the height of the impellers 301, 302, 303 changes in this embodiment in correlation with the diameter.

Figure 4 shows the scheme of a stirring chamber 400 with more than one opening angle. The stirring chamber 400 has an inlet 402, an outlet 403 at the bottom and is equipped with stirrer of the invention (schematic) having a shaft 401 and impeller blades 404. The stirring chamber 400 has side walls of which a portion is steep and thus exhibits a low opening angle (405) and a portion exhibiting a greater opening angle (406).

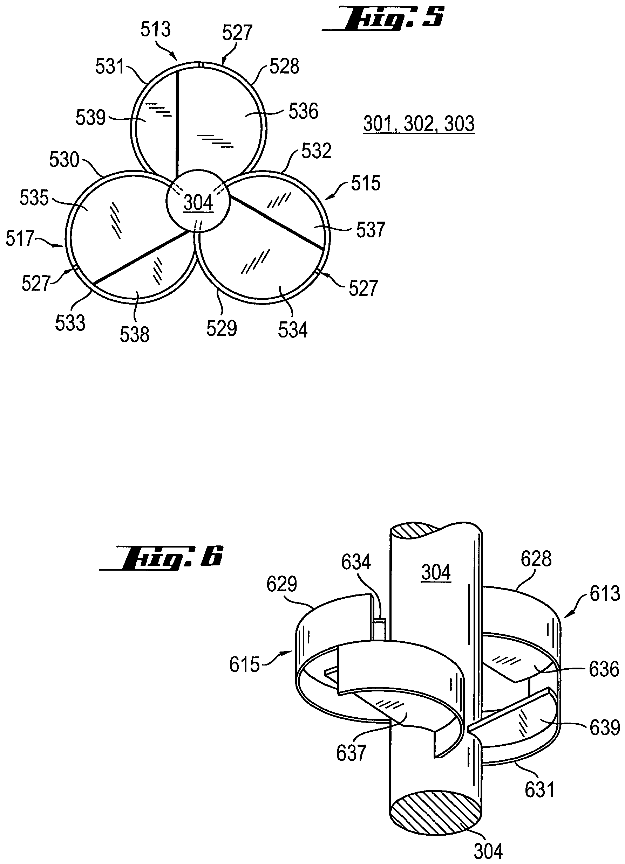

In Figure 5, each group of impellers 301, 302, 303 comprises a set of three impeller blades in this embodiment, such as impeller blades 528-530, arranged adjacent a similar set of three impeller blades 531-533 curved in the opposite direction. It should be noted that the number of groups of impellers, and the number of impeller blades per group may vary according to need. For example, a stirring apparatus of Fig. 1 or 2 may have more or less than three groups of impellers. Each of the impeller blades 528-533 has its major surface area parallel to the axis of rotation of shaft 304 in this embodiment (in contrast to the stirrers in Fig. 1 and 2, wherein the major surface area of the impeller blades is parallel to the stirring chamber side wall), and each major surface area is arcuate and in some embodiments is comprised of at least a portion of a cylinder. Each impeller blade 528-533 also has one end (the proximate end) suitably anchored to shaft 304 and each impeller blade is anchored to an oppositely curved impeller blade to provide rigidity to the impeller. Thus two impeller blades are joined to form an arcuate shape that is substantially circular in aspect. In accordance with the present exemplary embodiment depicted in FIG. 3 and 5, each impeller set or group 301, 302, 303 includes three pairs of impellers joined to form an arcuate shape that is substantially circular in aspect 513, 515 and 517. To add further rigidity to each impeller and further promote their stirring action, rigidly secured supporting elements in the form of disk segments 534-539 may be provided. Supporting elements 534-539 are arranged normal to the axis of shaft 304, follow the inner curvature of the impeller blades and overlap one another when viewed in a vertical manner, thus obstructing direct downward flow of glass within the conical volume occupied by the stirrer. As will be appreciated, during rotation of stirrer 300 the impeller blades of some impeller sets throw the glass outward while the impeller blades of the remaining sets pull the glass inward, thereby thoroughly mixing the glass. In short, the movement imparted to the glass by the stirrer is such that not only is the glass thoroughly mixed but, in addition, the flow of glass down the cylinder side wall is effectively prevented by a dynamic dam to such flow created by pressures built up along the wall area.

It is recognized in WO 2008/088432 that the outside surface of the impeller blades of the stirrer is subject to high stress. This stress results in part from the viscosity of the molten glass flowing through the stirring apparatus as well as the close tolerance between the impeller blades and the stir chamber wall. It is known that the outermost portions of the impellers 527 are subject to the highest stresses during the stirring process, although forward facing surfaces of the stirrer (relative to the direction of rotation of the stirrer) and the wall portions adjacent to the impellers may also be subject to high stress.

These portions are preferably provided with means for reducing wear, such as the holes or grooves as described above, or may be plated with a more wear resistant material such as iridium, or an iridium alloy (e.g. an iridium-rhodium alloy).

Figure 6 shows a different perspective view of a group of impellers such as 301, 302, 303 of the stirrer 300, showing shaft 304, supporting members 634, 636, 637, 639, impeller blades 628, 629, 631, 632 and pairs of impellers joined to form an arcuate shape that is substantially circular in aspect 613 and 615.

Figure 7a shows a stirrer 710 with a shaft 711, stirring elements 730 that are rod-shaped stirring blades being arranged above each other and mounted sloped along the length of the shaft and connected to each other with two connecting elements 720.

Figure 7b shows a mixing apparatus 740 with a motor 745, a shaft 750 and rod-shaped stirring elements 770 being arranged above each other that are connected to each other with two connecting elements 775, one on each side, being placed in a stirring chamber with stirring chamber walls 755 in of the chamber being cylindrical in shape at the upper portion and stirring chamber walls 760 being conical at the lower portion wherein molten glass 785 is being introduced via the inlet 780 at the upper portion of the stirring chamber and an outlet 765 at the lower portion of the stirring chamber.

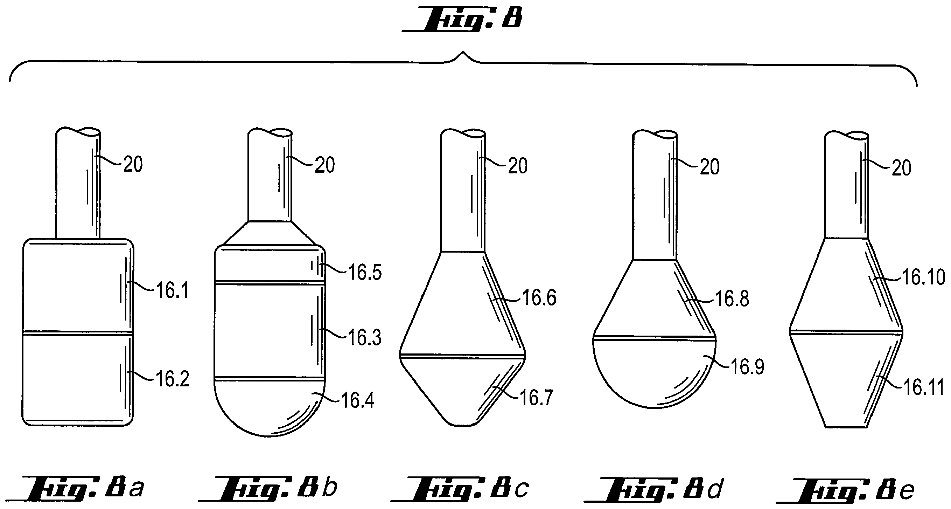

Figure 8a shows a stirrer with shaft 20 and the stirring element being a thickened portion, consisting of two cylindrical segments 16.1 and 16.2

Figure 8b shows a stirrer with shaft 20 and the stirring element being a thickened portion, consisting one cylindrical segment 16.3 and one segment 16.4 having a hemispherical shape and one frustoconical element 16.5 in connection with shaft 20.

Figure 8c shows a stirrer with shaft 20 and the stirring element being a thickened portion, consisting of one frustoconical segment 16.6 connected to shaft 20 and a conical segment 16.7.

Figure 8d shows a stirrer with shaft 20 and the stirring element being a thickened portion, consisting of one frustoconical segment 16.8 connected to shaft 20 and one segment 16.9 having a hemispherical shape.

Figure 8e shows a stirrer with shaft 20 and the stirring element being a thickened portion, consisting of two frustoconical segments 16.10 and 16.11 connected to each other with the wider side and one connected to the shaft 20 with its more narrow side.

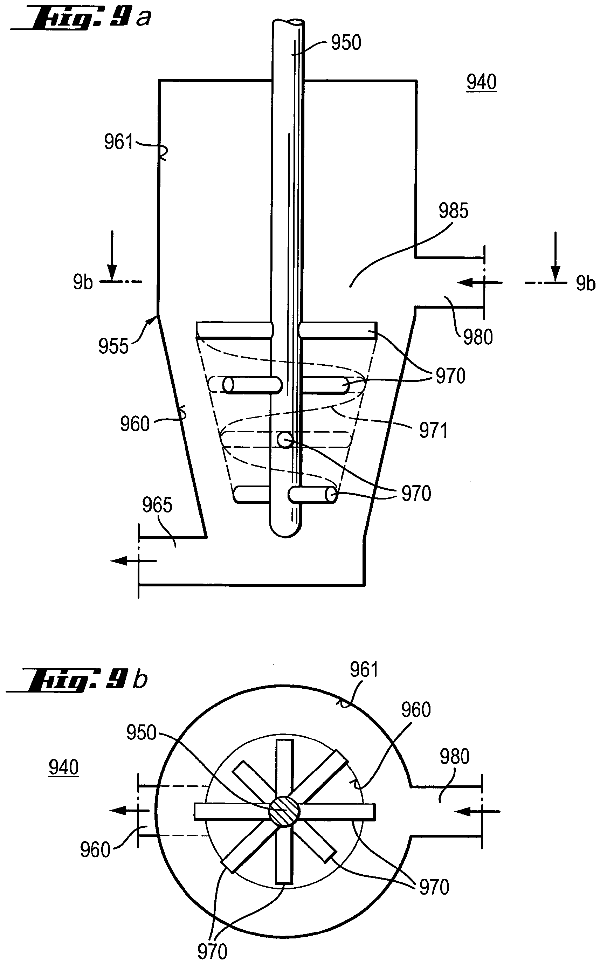

Figure 9a and Figure 9b as a section view acc line 9b-9b in Fig. 9a shows a mixing apparatus 940 with a shaft 950 and rod-shaped stirring elements 970 being arranged above each other along the length of the shaft and at an angle relative to each other in such a way that the surfaces of the stirring elements facing towards the inner surface of the stirring chamber are defining a helix 971, and being placed in a stirring chamber 961 with stirring chamber walls 955 where the chamber is cylindrical in shape at the upper portion and stirring chamber walls 960 being conical at the lower portion, wherein molten glass 985 is being introduced via the inlet 980 at the upper portion of the stirring chamber and an outlet 965 at the lower portion of the stirring chamber.

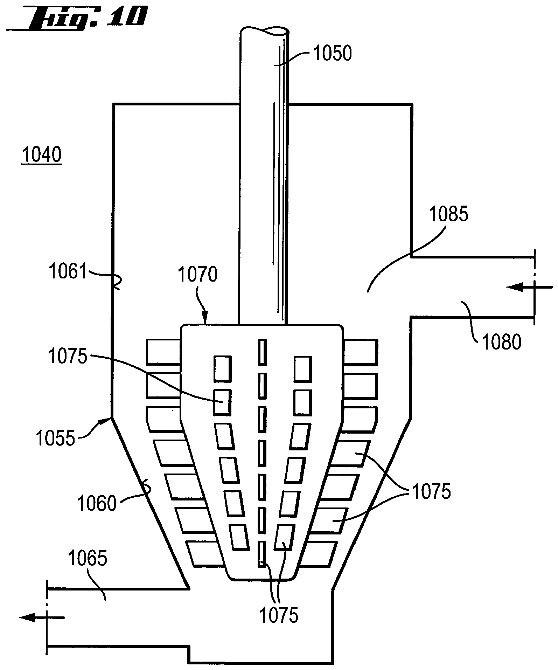

Figure 10 shows a mixing apparatus 1040 with a shaft 1050 and the stirring element 1070 being a thickened portion of the shaft, having a shape of a cylindrical element combined with a frustoconical element, the strirring element 1070 is equipped with blade elements 1075, being placed in a stirring chamber with stirring chamber walls 1055 where the chamber 1061 is cylindrical in shape at the upper portion and stirring chamber walls 1060 being conical at the lower portion, wherein molten glass 1085 is being introduced via the inlet 1080 at the upper portion of the stirring chamber and an outlet 1065 at the lower portion of the stirring chamber.

As will be evident to those skilled in the art, other stirrer designs as are known in the art may be used in conjunction with the teaching of this disclosure. Alternative stirrer designs include, but are not limited to designs employing a helical screw and stirrers employing paddles at a given angle relative to the direction of rotation of the stirrer. The priority document and all references or documents cited herein are incorporated by reference for all useful purposes.

LIST OF REFERENCE NUMBERS

Fig. 1, 2:

1 Inlet tube
2 Outlet
3 Shaft
4 Stirring chamber
5 Impeller
6 Stirrer
7 Opening angle
8 Blades

Fig. 3:

300 Stirrer
301 Group of impeller
302 Group of impeller
303 Group of impeller
304 Shaft
305 Supporting elements

Fig. 4:

400 Stirring chamber
401 Shaft
402 Inlet
403 Outlet

404 Impeller blades
405 Opening angle
406 Opening angle

Fig. 5:

513 Arcuate shape impeller
515 Arcuate shape impeller
517 Arcuate shape impeller
527 Impellers (three)
528 Impeller blade
529 Impeller blade
530 Impeller blade
531 Impeller blade (curved in the opposite direction)
532 Impeller blade (curved in the opposite direction)
533 Impeller blade (curved in the opposite direction)
534 Supporting elements, Disk segments
535 Supporting elements, Disk segments
536 Supporting elements, Disk segments
537 Supporting elements, Disk segments
538 Supporting elements, Disk segments
539 Supporting elements, Disk segments

Fig. 6:

613 Arcuate shape impeller
615 Arcuate shape impeller
628 Impeller blade
629 Impeller blade
631 Impeller blade
632 Impeller blade
634 Supporting members
636 Supporting members
637 Supporting members
639 Supporting members

Fig. 7a:

710 Stirrer
711 Shaft
720 Connecting elements
730 Stirring elements

Fig. 7b:

740 Mixing apparatus
745 Motor
750 Shaft
755 Chamber walls (cyl.)
760 Chamber walls (con.)

765 Outlet
770 Stirring elements
780 Inlet
785 Molten glass

Fig. 8a:

16.1 Cylindrical segment
16.2 Cylindrical segment
20 Shaft

Fig. 8b:

16.3 Cylindrical segment
16.4 Hemispherical segment
16.5 Frustoconical element
20 Shaft

Fig. 8c:

16.6 Frustoconical segment
16.7 Conical segment
20 Shaft

Fig. 8d:

16.8 Frustoconical segment
16.9 Hemispherical segment
20 Shaft

Fig. 8e:

16.10 Frustoconical segment
16.11 Frustoconical segment
20 Shaft

Fig. 9:

940 Mixing apparatus
950 Shaft
955 Stirring chamber walls
960 Conical lower portion of 955
961 Cylindrical upper portion of 955
965 Outlet
970 Stirring elements
971 Helix

980 Inlet
985 Molten glass

Fig. 10:

1040 Mixing apparatus
1050 Shaft
1055 Stirring chamber walls
1060 Conical part of 1055
1061 Cylindrical part of 1055
1065 Outlet
1070 Stirring elements
1075 Blade elements
1080 Inlet
1085 Molten glass

## Claims

1. A mixing apparatus suitable for stirring molten glass by applying a shear thereto, said apparatus comprising:

   - a substantially vertically-oriented stirring chamber having an inner shape of at least one cone or at least one section thereof;
   - an inlet arranged at the upper end of the stirring chamber;
   - an outlet arranged at the lower end of the stirring chamber, and
   - a stirrer placed within the stirring chamber comprising:

     a. a substantially vertically oriented, rotatable and axially movable shaft,
     b. a plurality of stirring elements extending outward from said shaft, being adjacent to each other along the axis of the shaft, and
     c. said plurality of stirring elements being axially arranged along the shaft in such a way that each of the stirring elements sweeps over a circular area defining a swept radius $R_{blade}$, the stirring chamber at the position at each length of said shaft has an internal radius $R_{wall}$ being greater than $R_{blade}$, **characterized in that** said radius $R_{blade}$ of said circular area and correspondingly the size of the stirring elements increase along the length of the shaft from the lower portion of said shaft towards the upper portion of said shaft, the shaft being substantially coaxial with the cone of the stirring chamber and the stirring elements projecting radially from said shaft into close proximity of the wall of the stirring chamber,

   wherein the shaft is arranged to be vertically moved along its axis during operation of said mixing apparatus such that when the shaft is moved upward, a first distance between the stirring elements and the stirring chamber is increased and the shear applied to the molten glass is decreased, and when the shaft is moved downward, the distance between the stirring elements and the stirring chamber is decreased and the shear applied to the molten glass is increased.

2. A mixing apparatus for stirring molten glass according to claim 1, further comprising:

   - a motor applying a torque T to the shaft of the stirrer to effect rotation of the stirrer within the stirring chamber, at a speed S as molten glass flows through the stirring chamber defining a swept volume V, said molten glass exhibiting a viscosity $\eta$;
   wherein S, T, V, $R_{blade}$, $R_{wall}$ and $\eta$ are selected such that the following relationships are satisfied for each of said stirring elements at its respective position within the stirring chamber:

$$(STV/\eta)^{0.5} >= 5.0 \ kg/s;$$

   wherein S is the speed of the stirrer in radians per second, T is the torque applied to the shaft of the stirrer to rotate the stirrer in newton-meters, V is the swept volume defined by the stirrer in $m^3$, $\eta$ is the viscosity of the molten glass in kg/m * s; and

$$(2 \, \pi \, \eta \; N \; R_{blade}) \, / \, (R_{wall} - R_{blade}) <= 3.5*10^{-3} \; N/m^2,$$

wherein $\eta$ and N are as defined above, $R_{wall}$ is the inner diameter of the stirring chamber at the position of a respective stirring element mounted on the shaft, and $R_{blade}$ is the maximum diameter of the stirring element mounted on the shaft and both $R_{wall}$ and $R_{blade}$ are in meters.

3. A mixing apparatus according to claim 1 or 2, wherein the inner surface of the stirring chamber comprises a plurality of grooves, said grooves being preferably substantially perpendicular with the axis of rotation of said shaft.

4. A mixing apparatus according to claim 1, 2 or 3, wherein said stirring elements of the stirrer are designed in such a way that the surface normal (the normal vector) of the surfaces of the stirring elements facing towards the inner surface of the stirring chamber are substantially perpendicular to the surface of the stirring chamber.

5. A mixing apparatus according to one or more of claims 1 to 5, wherein the plurality of stirring elements are a plurality of arcuately shaped impellers radially projecting from said shaft being adjacent to each other along the axis of the shaft, and a plurality of supporting elements for said impellers having portions laterally radiating from its center and having arcuate edges abutted against the impellers, wherein said supporting elements are axially arranged along the shaft, said arcuately shaped impellers being of the radius of the arcuate edges of said supporting elements abutted thereagainst, **characterized in that** the radius of both said impellers and the radius of said arcuate edges of said supporting elements increase along the length of the shaft.

6. A mixing apparatus according to claim 5, wherein the proximate end of each impeller is anchored to the shaft.

7. A mixing apparatus according to any of claims 5 to 6, wherein two adjacent impeller blades are joined in such a way to form an arcuate shape being substantially circular in aspect.

8. A mixing apparatus according to any of claims 5 to 7, wherein adjacent impeller blades are curved in the opposite direction.

9. A mixing apparatus according to any of claims 1 to 4, wherein said stirring elements are rod-shaped stirring blades.

10. A mixing apparatus according to any of claims 1 to 4 or 9, wherein said stirring elements are rod-shaped stirring blades leading through corresponding orifices in said shaft arranged above each other along the length of the shaft.

11. A mixing apparatus according to claim 1 to 4 or 9 to 10, wherein said rod-shaped stirring blades are arranged above each other along the length of the shaft and at an angle relative to each other in such a way that the surfaces of the stirring elements facing towards the inner surface of the stirring chamber and outward from said shaft are defining a helix.

12. A mixing apparatus according to any of claims 9 to 11, wherein said rod-shaped stirring blades are arranged above each other along the length of the shaft and connected to each other with at least one, substantially vertically-oriented, rod-shaped connecting element.

13. A mixing apparatus according to any of claims 1 to 4, wherein the stirring element comprises a thickened portion of the shaft.

14. A mixing apparatus according to any of claims 1 to 4 or 13, wherein the thickened portion has a shape that is selected from the group consisting of cylindrical, conical, spherical, hemispherical, frustoconical, bell-shaped and combinations thereof.

15. A mixing apparatus according to any of claims 1 to 4 or 13 to 14, wherein at least one blade element is fastened on the outside of said thickened portion.

16. A method for homogenizing molten glass, comprising

- providing a mixing apparatus according to at least one of claims 1 to 15;
- flowing molten glass through the stirring chamber;
- applying a torque to the shaft of the stirrer to rotate the stirrer within the stir chamber as the molten glass flows through the chamber, and
- vertically moving said shaft along its axis during operation of said mixing apparatus such that when the shaft is moved upward, a first distance between the stirring elements and the stirring chamber is increased and the shear applied to the molten glass is decreased, and when the shaft is moved downward, the distance between the stirring elements and the stirring chamber is decreased and the shear applied to the molten glass is increased.

_Fig. 1_

_Fig. 2_

Fig. 3

Fig. 4

Fig. 5

Fig. 6

711

710

730

720

*Fig. 7 a*

745

740

750

785

755

780

760

775

770

765

*Fig. 7 b*

Fig. 8

Fig. 8a

Fig. 8b

Fig. 8c

Fig. 8d

Fig. 8e

## Fig. 9 a

950

940

961

985

9b — · —         — · — 9b

955

980

960

970

971

970

965

## Fig. 9 b

961

960

950

940

980

960

970

970

Fig. 10

Europäisches
Patentamt

European
Patent Office

Office européen
des brevets

# EUROPEAN SEARCH REPORT

Application Number

EP 17 20 4637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2007 011505 A1 (EGLASS MACHINERY & PARTS GMBH [DE]) 28 August 2008 (2008-08-28) | 1,2,4, 9-16 | INV. C03B5/187 B01F7/00 |
| Y | * paragraphs [0028], [0029], [0074] - [0077], [0093] * * figures 5,9 * | 3,5-8 | |
| X | US 3 268 213 A (CALA CHARLES F) 23 August 1966 (1966-08-23) | 1,2,4, 9-12,16 | |
| Y | * column 2, lines 35-41 * * column 3, lines 18-62 * * figure 1 * | 3,5-8 | |
| Y,D | WO 2008/088432 A1 (CORNING INC [US]; ADELSBERG LEE M [US]; GOLLER MARTIN H [US]; LINEMAN) 24 July 2008 (2008-07-24) * paragraphs [0013], [0015] - [0017], [0037] - [0039] * * figures 1-4 * | 3,5-8 | |

TECHNICAL FIELDS
SEARCHED     (IPC)

C03B
B01F

The present search report has been drawn up for all claims

| Place of search | Date of completion of the search | Examiner |
|---|---|---|
| Munich | 25 June 2018 | Pollio, Marco |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

   ......................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 17 20 4637

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2018

| Patent document cited in search report | Publication date | Patent family member(s) | Publication date |
|---|---|---|---|
| DE 102007011505 A1 | 28-08-2008 | NONE | |
| US 3268213 A | 23-08-1966 | BE 665091 A | 01-10-1965 |
| | | DE 1496443 A1 | 14-05-1969 |
| | | GB 1070763 A | 01-06-1967 |
| | | NL 6507288 A | 09-12-1965 |
| | | US 3268213 A | 23-08-1966 |
| WO 2008088432 A1 | 24-07-2008 | CN 101616874 A | 30-12-2009 |
| | | JP 5318777 B2 | 16-10-2013 |
| | | JP 2010513211 A | 30-04-2010 |
| | | KR 20090099071 A | 21-09-2009 |
| | | TW 200838818 A | 01-10-2008 |
| | | TW 201335089 A | 01-09-2013 |
| | | US 2008151687 A1 | 26-06-2008 |
| | | US 2013003492 A1 | 03-01-2013 |
| | | WO 2008088432 A1 | 24-07-2008 |

EPO FORM P0459

For more details about this annex : see Official Journal of the European Patent Office, No. 12/82

**REFERENCES CITED IN THE DESCRIPTION**

**Patent documents cited in the description**

- US 7127919 B
- US 2831664 A
- US 3419373 A
- WO 2008088432 A
- US 20100126225 A
- US 7490487 B2
- EP 1781830 A
- EP 1295954 A